# FASCICULE DE BREVET EUROPEEN

(11) **EP 1 736 085 B1**
(45) Date de publication et mention de la délivrance du brevet: **14.05.2008**
(21) Numéro de dépôt: 06356071.8
(22) Date de dépôt: 16.06.2006
(51) Int. Cl.: A47J 37/12, A47J 27/64

(54) **Cuiseur à panier de cuisson mobile, comportant un détecteur de début de cuisson**
Teigwarenkocher mit einem beweglichen Korb und Kochzustandsdetektor
Pasta cooker with movable basket, comprising a boiling sensor

(30) Priorité: 22.06.2005 FR 0506334
(43) Date de publication de la demande: 27.12.2006
(73) Titulaire: SEB SA, 69130 Ecully (FR)
(72) Inventeur: Balandier, Jean-Marie, 21240 Talant (FR); Paulbert, Philippe, 21000 Dijon (FR); Pellerin, Olivier, 21510 Minot (FR)
(74) Mandataire: Kiehl, Hubert

(56) Documents cités:
- EP-A- 0 796 584
- WO-A-20/04002280
- US-A- 5 937 741
- US-A1- 2003 192 435

## Description

La présente invention concerne le domaine technique des cuiseurs comprenant un panier de cuisson mobile dans une cuve contenant un bain de cuisson susceptible d'être porté à ébullition.

La présente invention concerne notamment les cuiseurs à pâtes. La présente invention concerne les ustensiles de cuisson placés sur une source de chauffe ainsi que les appareils de cuisson électrique comportant une source de chauffe.

Il est connu du document US 2003/192435 un appareil de cuisson comportant un panier de cuisson monté mobile dans une cuve. Le panier de cuisson repose sur un dispositif de monte et baisse issu du fond de la cuve. Un tube de vapeur, agencé au centre du dispositif de monte et baisse, communique avec un dispositif de détection de vapeur placé sous la cuve. Un couvercle ferme la cuve. Lorsque l'eau présente dans la cuve bout et produit de la vapeur, la vapeur atteignant le dispositif de détection de vapeur entraîne la descente du panier initialement placé en position haute. Un inconvénient de cette construction est que le dispositif de détection de vapeur placé sous la cuve demande la présence d'un couvercle fermant la cuve, pour que la vapeur descende dans le tube de vapeur lors de l'ébullition de l'eau. De plus, lors de la cuisson après la descente du panier, de l'eau pourrait s'écouler par le tube de vapeur, notamment si la cuve est trop remplie ou si de la mousse se forme pendant la cuisson.

Un but de la présente invention est de proposer un cuiseur comportant une détection de vapeur offrant une meilleure sensibilité de détection.

Un autre but de la présente invention est de proposer un cuiseur comportant une détection de vapeur présentant une construction simple.

Un autre but de la présente invention est de proposer un cuiseur comportant une détection de vapeur susceptible de fonctionner avec un couvercle laissant un passage avec la cuve.

Un autre but de la présente invention est de proposer un cuiseur du type précité permettant une cuisson sans surveillance.

Ces buts sont atteints avec un cuiseur, notamment un cuiseur à pâtes, comportant une cuve prévue pour recevoir un bain de cuisson susceptible d'être porté à ébullition, un panier de cuisson agencé au moins partiellement dans la cuve, monté mobile entre une position relevée et une position abaissée, un dispositif de détection de vapeur prévu pour commander la descente du panier de cuisson dans la cuve, du fait qu'une paroi latérale de la cuve présente une ouverture de détection de vapeur agencée au niveau du panier de cuisson occupant la position relevée, l'ouverture de détection de vapeur communiquant avec une chambre, le dispositif de détection de vapeur étant susceptible d'être activé par la vapeur circulant dans ladite chambre. Un tel agencement de la détection de vapeur permet de réaliser un cuiseur présentant une construction simple tout en permettant une détection de vapeur efficace. Le préchauffage du bain de cuisson puis la cuisson des aliments peuvent être effectués sans surveillance. De plus, la présence d'un couvercle fermant la cuve n'est pas nécessaire.

Avantageusement, la paroi latérale de la cuve comporte une conformation interne surplombant l'ouverture de détection de vapeur. Cette disposition permet d'améliorer la réactivité du dispositif de détection de vapeur en favorisant l'entrée de la vapeur dans le conduit.

Selon une forme de réalisation avantageuse, la cuve est montée dans un boîtier. Le boîtier peut notamment comporter une paroi extérieure présentant une élévation de température limitée lors d'une opération de cuisson.

Avantageusement alors la chambre est agencée dans le boîtier.

Avantageusement encore, la chambre débouche dans une paroi supérieure du boîtier. Cette disposition favorise l'échappement de vapeur et évite l'écoulement de condensats à l'extérieur du cuiseur.

Avantageusement encore la cuve est montée amovible dans le boîtier. Cette disposition permet notamment de faciliter le nettoyage de la cuve.

Avantageusement le panier de cuisson en position relevée est agencé partiellement à l'intérieur de la cuve. Cette disposition permet de réduire la hauteur du boîtier.

Avantageusement un couvercle agencé sur le panier de cuisson ménage un passage extérieur avec la cuve lorsque le panier de cuisson occupe la position abaissée dans la cuve. Cette disposition permet notamment d'éviter les phénomènes de moussage et de débordement du bain de cuisson.

Avantageusement, le dispositif de détection de vapeur comporte un capteur de température. L'emplacement du conduit permet d'obtenir une détection de vapeur indépendante de la température initiale du bain de cuisson.

Avantageusement encore la chambre est formée par un conduit. Cette disposition permet de confiner la vapeur permettant d'activer le dispositif de détection de vapeur.

Avantageusement alors, le capteur de température est agencé à l'extérieur du conduit. Cette disposition permet d'augmenter la fiabilité du dispositif de détection de vapeur et de simplifier sa construction.

Avantageusement alors, pour une bonne sensibilité de détection, le capteur de température est monté contre une paroi du conduit.

Avantageusement encore, pour augmenter la sensibilité de détection, la paroi du conduit est amincie au niveau du capteur de température.

Avantageusement encore, le conduit est ascendant. Cette disposition permet de recycler les condensats dans la cuve.

Selon une forme de réalisation avantageuse la cuve est associée à des moyens de chauffe. Par exemple les moyens de chauffe peuvent être solidaires de la cuve ou encore être montés dans le boîtier. En alternative la cuve peut être dépourvue de moyens de chauffe et être prévue pour être placée sur une source chauffante.

L'invention sera mieux comprise à l'étude d'un exemple de réalisation, pris à titre nullement limitatif, illustré dans les figures annexées, dans lesquelles :
- la figure 1 est une vue schématique en éclaté d'un exemple de réalisation d'un cuiseur selon l'invention,
- la figure 2 est une vue de côté en coupe du cuiseur illustré à la figure 1,
- la figure 3 est une vue en perspective du boîtier et de la cuve du cuiseur illustré aux figures 1 et 2, le panier de cuisson, le couvercle et l'accessoire à sauces ayant été retirés,
- la figure 4 est une vue en perspective de dessus du panier de cuisson visible aux figures 1 et 2,
- la figure 5 est une vue en perspective de dessous du panier de cuisson visible aux figures 1 et 2,
- la figure 6 est une vue en perspective et en coupe du cuiseur illustré aux figures 1 et 2, le panier de cuisson étant en position relevée,
- la figure 7 est une vue en perspective et en coupe du cuiseur illustré aux figures 1, 2 et 6, le panier de cuisson étant en position abaissée,
- la figure 8 est une vue d'une partie du dispositif de détection de vapeur.

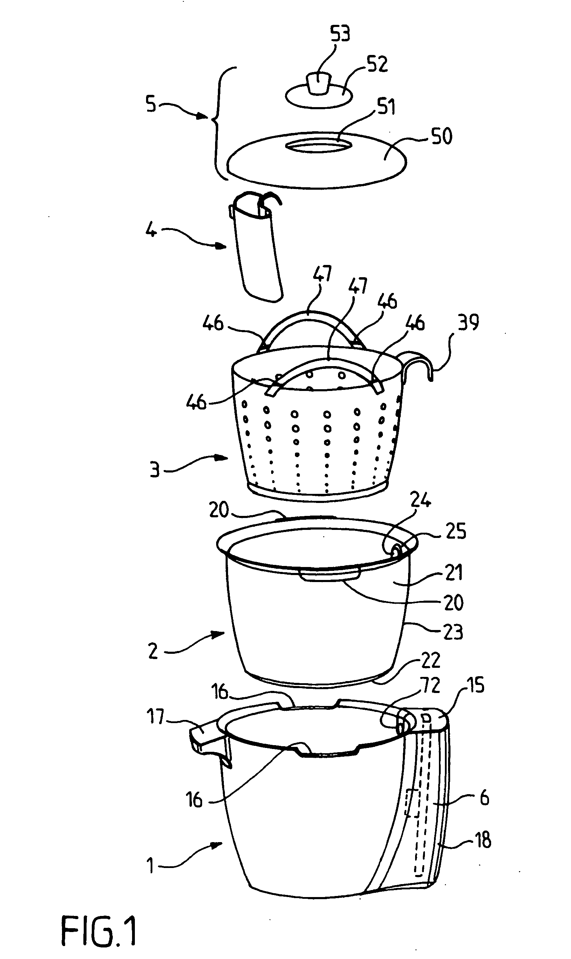

L'appareil illustré aux figures 1 à 8 est un cuiseur, notamment un cuiseur à pâtes, comportant un boîtier 1, une cuve 2, un panier de cuisson 3, un accessoire à sauces 4, et un couvercle 5.

Tel que visible sur la figure 1, le boîtier 1 forme un logement 10 prévu pour recevoir la cuve 2. Le bord supérieur du logement 10 présente des échancrures 16 prévues pour recevoir des poignées 20 de la cuve 2.

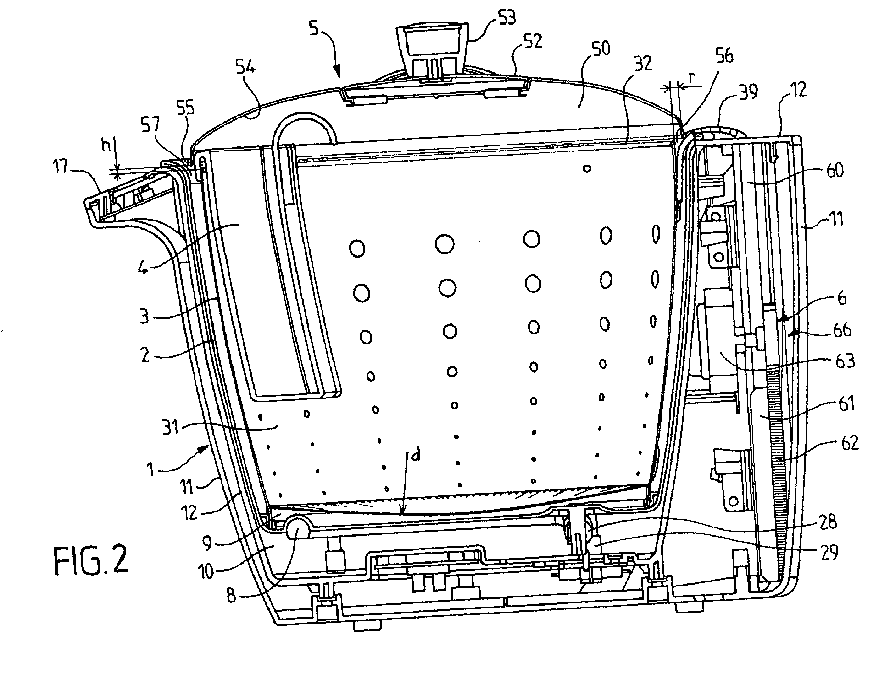

Le boîtier 1 présente une protubérance latérale supérieure 17 logeant une partie des organes de commande du cuiseur. La protubérance latérale supérieure 17 s'étend à partir du bord supérieur du boîtier 1. La protubérance latérale 17 forme également un organe de préhension. Le boîtier 1 présente une protubérance latérale 18 logeant un dispositif de monte et baisse 6 du panier de cuisson 3. La protubérance latérale 18 s'étend sur toute la hauteur du boîtier 1. Tel que visible sur la figure 2, le boîtier 1 comporte une coque inférieure extérieure 11 et une coque supérieure intérieure 12.

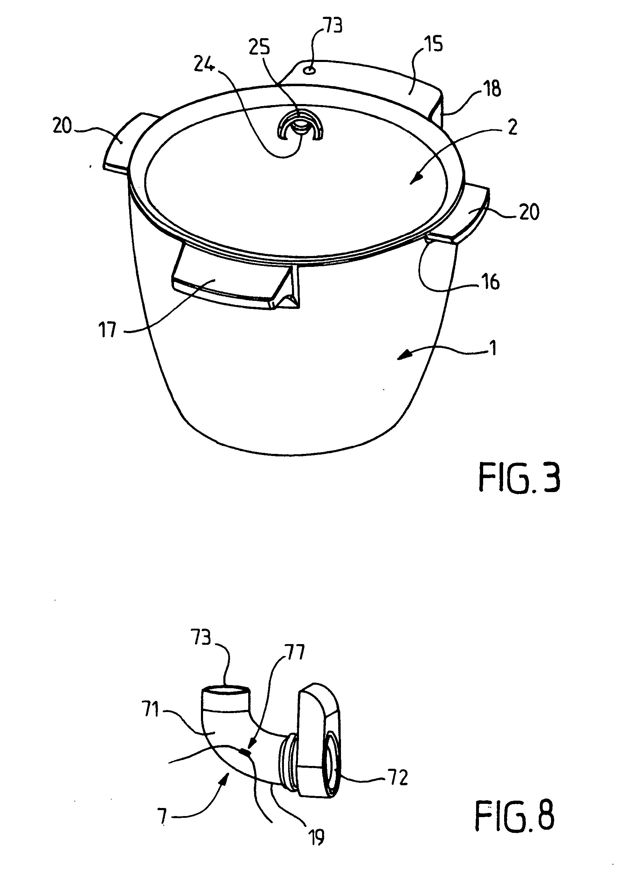

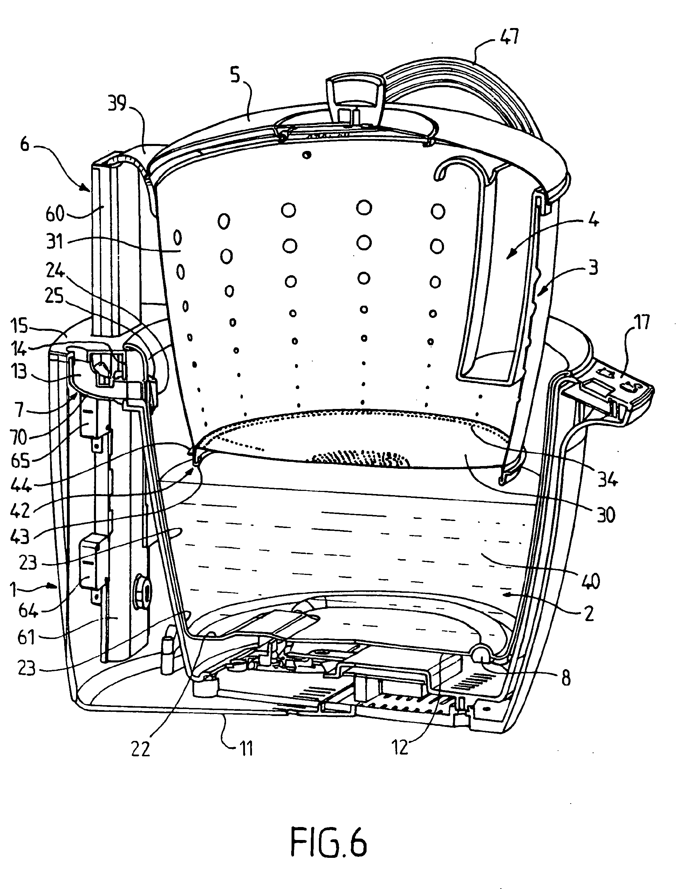

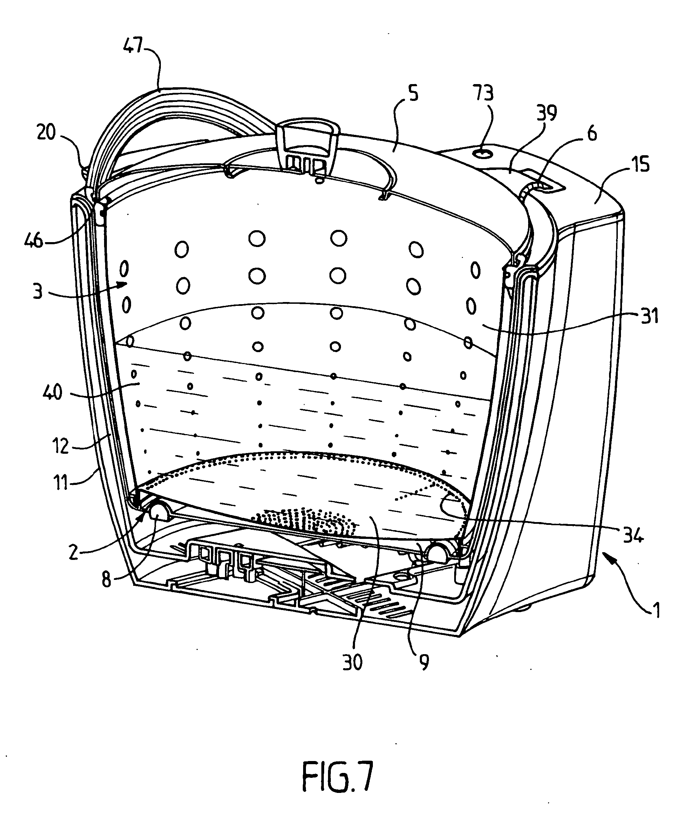

La cuve 2 comporte des poignées 20. La cuve comporte un corps 21 présentant un fond 22 et une paroi latérale 23. Le corps 21 de la cuve 2 est par exemple réalisé en aluminium revêtu. Les poignées 20 sont montées sur le corps 21. Tel que montré à la figure 3, la cuve 2 est montée dans le boîtier 1. Plus particulièrement, la cuve 2 est montée amovible dans le boîtier 1. La cuve 2 est associée à des moyens de chauffe 8. Tel que montré à la figure 2, les moyens de chauffe 8 sont agencés sous la cuve 2. La cuve 2 est prévue pour recevoir un bain de cuisson 40 visible sur les figures 6 et 7. Le bain de cuisson 40 placé dans la cuve 2 est susceptible d'être porté à ébullition par les moyens de chauffe 8.

Le panier de cuisson 3 est agencé dans la cuve 2. Le panier de cuisson 3 est associé au dispositif de monte et baisse 6. Le panier de cuisson 3 est monté mobile entre une position relevée, illustrée à la figure 6, et une position abaissée, illustrée aux figures 2 et 7. Le panier de cuisson 3 est par exemple réalisé en acier inoxydable.

Le panier de cuisson 3 présente un bord périphérique supérieur 32 agencé à l'intérieur de la cuve 2 lorsque le panier de cuisson 3 est en position abaissée dans la cuve 2, tel que montré à la figure 2. Le panier de cuisson 3 en position relevée est agencé partiellement à l'intérieur de la cuve 2, tel que montré à la figure 6.

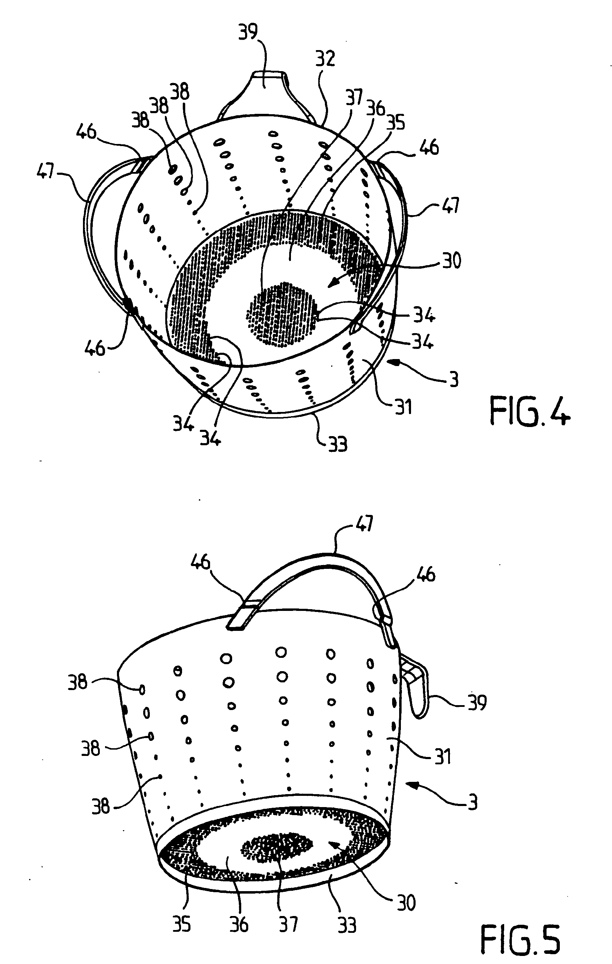

Tel que mieux visible aux figures 4 et 5, le panier de cuisson 3 présente un fond ajouré 30. Le panier de cuisson 3 comporte une paroi latérale perforée 31. La paroi latérale perforée 31 présente des ouvertures latérales 38. La taille des ouvertures latérales 38 augmente du bas vers le haut du panier de cuisson 3. Le panier de cuisson 3 comporte un organe d'accrochage 39 prévu pour coopérer avec le dispositif de monte et baisse 6.

Plus particulièrement, le fond ajouré 30 comporte des ouvertures 34. Seule une partie des ouvertures 34 a été représentée sur les figures 2, 6 et 7. La largeur des ouvertures 34 est de préférence comprise entre 1 et 2 mm, pour assurer un passage de vapeur suffisant, tout en empêchant le passage de pâtes telles que les spaghetti. Le fond ajouré 30 présente une zone périphérique 35 pourvue d'ouvertures 34. La zone périphérique 35 n'est toutefois pas nécessairement immédiatement adjacente à la paroi latérale perforée 31. La zone périphérique 35 comporte par exemple une densité d'ouvertures 34 comprise entre 15 et 20%. La zone périphérique 35 entoure une zone intermédiaire 36 moins dense en ouvertures. Plus particulièrement la zone intermédiaire 36 est dépourvue d'ouvertures. La zone intermédiaire 36 est relevée en direction de la zone périphérique 35. Le fond ajouré 30 présente une zone centrale 37 pourvue d'ouvertures 34. La zone centrale 37 comporte par exemple aussi une densité d'ouvertures 34 comprise entre 15 et 20%. La zone périphérique 35, la zone intermédiaire 36 et la zone centrale 37 sont représentées schématiquement sur les figures 4 et 5.

Tel que mieux visible sur la figure 2, le fond ajouré 30 est bombé vers le bas. Le fond ajouré 30 présente par exemple un rayon d de l'ordre de 80 cm. Le panier de cuisson 3 comporte une paroi périphérique 33 entourant le fond ajouré 30. Le panier de cuisson 3 en position abaissée dans la cuve 2 délimite avec la cuve 2 une chambre d'ébullition 9 sous le fond ajouré 30. Le panier de cuisson 3 repose sur la cuve 2. Plus particulièrement, le panier de cuisson 3 repose sur le fond 22 de la cuve 2. La paroi périphérique 33 porte un joint 42 prévu pour prendre appui contre la cuve 2. Le joint 42 présente une section en U enserrant la paroi périphérique 33. Le joint 42 présente une base 43 prévue pour reposer sur le fond 22 de la cuve 2. Le joint 42 présente une lèvre externe 44 prévue pour prendre appui contre la paroi latérale 23 de la cuve 2. Le joint 42 permet de limiter les fuites de vapeur entre la cuve 2 et le panier de cuisson 3. Le joint 42 permet aussi d'éviter de rayer la cuve 2 avec le panier de cuisson 3.

Les moyens de chauffe 8 sont agencés en dessous de la chambre d'ébullition 9. La puissance des moyens de chauffe 8 est par exemple de l'ordre de 2000 W. Plus particulièrement, les moyens de chauffe 8 sont agencés en dessous de la zone périphérique 35. Les moyens de chauffe 8 sont formés par un élément chauffant blindé 28 rapporté sous le fond de la cuve 2. Les moyens de chauffe 8 coopèrent avec un connecteur 29 agencé dans le boîtier 1.

L'accessoire à sauces 4 est accroché sur le bord périphérique supérieur 32 du panier de cuisson 3, pour permettre le réchauffage voire la cuisson de sauces lors de la cuisson des aliments placés dans le panier de cuisson 3. L'accessoire à sauces 4 peut notamment être réalisé en matière plastique.

Le couvercle 5 comporte un corps principal 50 présentant une ouverture supérieure 51 et un corps secondaire 52 muni d'un organe de préhension 53, tel que mieux visible sur la figure 1. Le corps secondaire 52 est amovible et est prévu pour fermer l'ouverture supérieure 51. Le corps principal 50 et le corps secondaire 52 sont par exemple réalisés en acier inoxydable.

Le couvercle 5 est agencé sur le panier de cuisson 3. Le couvercle 5 couvre le panier de cuisson 3. Le couvercle 5 s'étend à distance du bord périphérique supérieur 32 du panier de cuisson 3. Plus particulièrement, le couvercle 5 repose sur des supports 46 issus du panier de cuisson 3. Les supports 46 forment des moyens de préhension 47.

Le couvercle 5 présente une paroi inférieure 54 ayant une partie périphérique inclinée vers le bas en direction de la périphérie. Le couvercle 5 comporte un bord périphérique inférieur 55 s'étendant à l'extérieur du panier de cuisson 3. Le bord périphérique inférieur 55 est disposé à une distance h au dessus du bord périphérique supérieur 32 du panier de cuisson 3. La distance h est par exemple comprise entre 1 et 2 mm. Le bord périphérique inférieur 55 est disposé à une distance r à l'extérieur du bord périphérique supérieur 32 du panier de cuisson 3. La distance r est par exemple comprise entre 2 et 5 mm. Le bord périphérique inférieur 55 du couvercle 5 descend à l'intérieur de la cuve 2 lorsque le couvercle 5 est agencé sur le panier de cuisson 3 en place dans la cuve pour la cuisson, tel que visible sur la figure 2. Le panier de cuisson 3 est alors en position abaissée dans la cuve 2. Le bord périphérique inférieur 55 prolonge la paroi inférieure 54.

Le couvercle 5 agencé sur le panier de cuisson 3 ménage un passage 56 avec le panier de cuisson 3. La section du passage 56 dépend de la distance h et de la distance r. Le couvercle 5 agencé sur le panier de cuisson 3 ménage un passage extérieur 57 avec la cuve 2 lorsque le panier de cuisson 3 occupe la position abaissée dans la cuve 2.

Le dispositif de monte et baisse 6 comporte un organe d'entraînement 60 mobile par rapport au boîtier 1. L'organe d'entraînement 60 est monté dans une glissière 61 solidaire du boîtier 1. L'organe d'entraînement 60 comporte une crémaillère 62 entraînée par un moteur 63. L'organe d'accrochage 39 du panier de cuisson 3 est monté de manière amovible sur l'organe d'entraînement 60. L'organe d'entraînement 60 active un détecteur de fin de course inférieur 64 lors de la descente du panier de cuisson 3, et un détecteur de fin de course supérieur 65 lors de la remontée du panier de cuisson 3. Le détecteur de fin de course inférieur 64 et le détecteur de fin de course supérieur 65, visibles sur la figure 6, sont par exemple formés par des interrupteurs.

Le cuiseur comporte un dispositif de maintien 66 prévu pour bloquer le panier de cuisson 3 en position abaissée dans la cuve 2 lors de la cuisson, afin d'éviter que la vapeur s'échappe de la chambre d'ébullition en dehors des ouvertures 34. Plus particulièrement, le dispositif de maintien 66 est formé par le dispositif de monte et baisse 6 du panier de cuisson 3. Le moteur 63 bloque la crémaillère 62 portée par l'organe d'entraînement 60. Les efforts exercés par la vapeur générée dans la chambre d'ébullition 9 exercent un couple incompatible avec l'extraction de l'organe d'accrochage 39 de l'organe d'entraînement 60. Le panier de cuisson 3 est maintenu en position abaissée sur le fond 22 de la cuve 2. Toutefois le dispositif de maintien 66 peut présenter une certaine élasticité de manière à laisser échapper de la vapeur entre le panier de cuisson 3 et la cuve 2 lorsque l'effort exercé par la vapeur est trop important.

Un dispositif de détection de vapeur 7 est prévu pour commander la descente du panier de cuisson 3 dans la cuve 2. A cet effet, la paroi latérale 23 de la cuve 2 présente une ouverture de détection de vapeur 24 agencée au niveau du panier de cuisson 3 occupant une position relevée, tel que visible sur la figure 6. La section de l'ouverture de détection de vapeur 24 correspond de préférence à un diamètre compris entre 10 et 20 mm: La paroi latérale 23 comporte une conformation interne 25 surplombant l'ouverture de détection de vapeur 24. La conformation interne 25 s'étend de préférence de part et d'autre de l'ouverture de détection de vapeur 24, et obture partiellement l'espace compris entre le panier de cuisson 3 en position relevée et la cuve 2. L'ouverture de détection de vapeur 24 communique avec une chambre 13. Le dispositif de détection de vapeur 7 est susceptible d'être activé par la vapeur circulant dans la chambre 13 pour commander la descente du panier de cuisson 3 dans la cuve 2. La chambre 13 est agencée dans le boîtier 1. La chambre 13 débouche dans une paroi latérale 14 du boîtier 1 en regard de l'ouverture de détection de vapeur 24. La chambre 13 débouche à l'extérieur du cuiseur, dans une paroi supérieure 15 du boîtier 1. La paroi latérale 14 et la paroi supérieure 15 appartiennent à la coque supérieure intérieure 12 du boîtier 1.

Tel que visible aux figures 6 et 8, la chambre 13 est formée par un conduit 70. Le dispositif de détection de vapeur 7 comporte un capteur de température 77, visible sur la figure 8. Le capteur de température 77 est par exemple une résistance de type CTN. Le capteur de température 77 est agencé à l'extérieur du conduit 70. Le capteur de température 77 est monté contre une paroi 71 du conduit 70. La paroi 71 du conduit 70 est avantageusement amincie au niveau du capteur de température 77. Le conduit 70 présente une extrémité latérale 72 prévue pour être placée en regard de l'ouverture de détection de vapeur 24 de la cuve 2 placée dans le boîtier 1. Le conduit 70 présente une extrémité supérieure 73 débouchant dans une ouverture de la paroi supérieure 15. Le conduit 70 est ascendant. Plus particulièrement, le conduit 70 est oblique et coudé vers le haut, pour faciliter l'échappement de la vapeur.

Le capteur de température 77 est associé à un dispositif de commande prévu pour alimenter le moteur 63 lorsque la température seuil est détectée afin de descendre le panier de cuisson 3 en position abaissée. Le dispositif de commande comporte également un minuteur réglable par l'utilisateur. Le dispositif de commande est prévu pour alimenter le moteur 63 lorsque le temps programmé est écoulé, afin de remonter le panier de cuisson 3 en position relevée.

Le fonctionnement du cuiseur est le suivant.

Le positionnement correct de la cuve 2 dans le boîtier 1 est obtenu par la mise en place des poignées 20 dans les échancrures 16, possible seulement dans la position permettant l'alimentation des moyens de chauffe 8 par le connecteur 29. L'utilisateur remplit la cuve 2 de la quantité de bain de cuisson souhaitée, par exemple de l'eau avec des aromates, et place les aliments à cuire dans le panier de cuisson 3 en position relevée. Pour la cuisson de pâtes, une proportion de 3 litres d'eau pour 500 g de pâtes sèches peut suffire, alors que la quantité d'eau usuelle est de 5 litres d'eau pour 500 g de pâtes sèches. L'utilisateur met en marche le cuiseur après avoir sélectionné une durée de cuisson. Les moyens de chauffe 8 portent le bain de cuisson 40 à ébullition. De la vapeur monte entre la cuve 2 et le panier de cuisson 3. Le dispositif de détection de vapeur 7 détecte la vapeur circulant dans la chambre 13 pour commander la descente du panier de cuisson 3 dans la cuve 2. Si désiré, le dispositif de chauffe peut continuer à alimenter les moyens de chauffe à pleine puissance puis alimenter les moyens de chauffe 8 à puissance réduite. La vapeur produite dans la chambre d'ébullition 9, notamment lors de la chauffe à pleine puissance, permet d'agiter les aliments pendant la cuisson. Le collage des aliments sur la paroi latérale ajourée 31 du panier de cuisson 3 et le collage des aliments entre eux peut ainsi être évité. Le chauffage à pleine puissance après la descente du panier de cuisson 3 dans la cuve 2 permet de ramollir plus rapidement le pied de spaghetti non coupés introduits par l'ouverture supérieure 51 du couvercle 5. La descente des spaghetti dans le panier de cuisson 3 est ainsi facilitée. Le couvercle 5 permet d'éviter les projections du bain de cuisson et de limiter la formation de mousse, grâce au bord périphérique inférieur 55 et au passage 56. Les aliments sont cuits pendant la durée indiquée. Lorsque la durée de cuisson est écoulée, le panier de cuisson 3 est remonté. Le cuiseur permet une cuisson automatique. La cuisson peut être effectuée sans surveillance. Une phase de maintien au chaud peut être prévue, par exemple en alternant des périodes dans lesquelles le panier de cuisson 3 est en position relevée et des périodes dans lesquelles le panier de cuisson 3 est en position abaissée dans la cuve 2. Si désiré, les moyens de chauffe 8 peuvent être alimentés par intermittence, notamment après la descente du panier de cuisson 3 dans la cuve 2 et/ou pendant la phase de maintien au chaud.

Plus particulièrement selon l'invention, le bain de cuisson 40 porté à ébullition génère de la vapeur s'échappant principalement entre la cuve 2 et le panier de cuisson 3. La conformation interne 25 surplombant l'ouverture de détection de vapeur 24 contribue à dévier une partie de la vapeur dans le conduit 70. Le passage de la vapeur dans le conduit 70 échauffe le capteur de température 77. Lorsque le seuil de température défini est dépassé, le dispositif de commande associé au capteur de température 77 alimente le moteur 63 pour descendre le panier de cuisson 3 dans la cuve 2 jusqu'à ce que l'organe d'entraînement 60 actionne l'interrupteur de fin de course inférieur 64. La détection de vapeur est suffisamment fiable et rapide pour fonctionner avec le couvercle 3 ne fermant pas la cuve 2. La construction du cuiseur reste simple.

A titre de variante, la chambre 13 ne débouche pas nécessairement dans une paroi supérieure du boîtier.

A titre de variante, la cuve 2 peut être montée fixe dans le boîtier 1.

A titre de variante, le dispositif de monte et baisse 6 et la chambre 13 peuvent être solidaires de la cuve 2. A titre de variante, le cuiseur peut être dépourvu de boîtier logeant la cuve 2.

A titre de variante, le capteur de température 77 n'est pas nécessairement une résistance de type CTN. D'autres types de capteurs de température, tels que par exemple un thermostat bimétallique, peuvent être envisagés.

A titre de variante, le dispositif de détection de vapeur 7 ne comporte pas nécessairement un capteur de température 77. D'autres types de capteurs tels que par exemple un capteur d'humidité peuvent être envisagés.

A titre de variante, le cuiseur ne comporte pas nécessairement des moyens de chauffe. Le bain de cuisson peut alors être porté à ébullition par des moyens de chauffe n'appartenant pas au cuiseur.

La présente invention n'est nullement limitée à l'exemple de réalisation décrit et à ses variantes, mais englobe de nombreuses modifications dans le cadre des revendications.

## Revendications

1. Cuiseur, notamment cuiseur à pâtes, comportant une cuve (2) prévue pour recevoir un bain de cuisson susceptible d'être porté à ébullition, un panier de cuisson (3) agencé au moins partiellement dans la cuve (2), monté mobile entre une position relevée et une position abaissée, un dispositif de détection de vapeur (7) prévu pour commander la descente du panier de cuisson (3) dans la cuve (2), **caractérisé en ce qu**'une paroi latérale (23) de la cuve (2) présente une ouverture de détection de vapeur (24) agencée au niveau du panier de cuisson (3) occupant la position relevée, l'ouverture de détection de vapeur (24) communiquant avec une chambre (13), le dispositif de détection de vapeur (7) étant susceptible d'être activé par la vapeur circulant dans la chambre (13).

2. Cuiseur selon la revendication 1, **caractérisé en ce que** la paroi latérale (23) de la cuve (2) comporte une conformation interne (25) surplombant l'ouverture de détection de vapeur (24).

3. Cuiseur selon l'une des revendications 1 à 3, **caractérisé en ce que** la cuve (2) est montée dans un boîtier (1).

4. Cuiseur selon la revendication 3, **caractérisé en ce que** la chambre (13) est agencée dans le boîtier (1).

5. Cuiseur selon la revendication 4, **caractérisé en ce que** la chambre (13) débouche dans une paroi supérieure (15) du boîtier (1).

6. Cuiseur selon l'une des revendications 3 à 5, **caractérisé en ce que** la cuve (2) est montée amovible dans le boîtier (1).

7. Cuiseur selon l'une des revendications 1 à 6, **caractérisé en ce que** le panier de cuisson (3) en position relevée est agencé partiellement à l'intérieur de la cuve (2).

8. Cuiseur selon l'une des revendications 1 à 7, **caractérisé en ce qu**'un couvercle (5) agencé sur le panier de cuisson (3) ménage un passage extérieur (57) avec la cuve (2) lorsque le panier de cuisson (3) occupe la position abaissée dans la cuve (2).

9. Cuiseur selon l'une des revendications 1 à 8, **caractérisé en ce que** le dispositif de détection de vapeur (7) comporte un capteur de température (77).

10. Cuiseur selon l'une des revendications 1 à 9, **caractérisé en ce que** la chambre (13) est formée par un conduit (70).

11. Cuiseur selon l'une des revendications 9 et 10, **caractérisé en ce que** le capteur de température (77) est agencé à l'extérieur du conduit (70).

12. Cuiseur selon la revendication 11, **caractérisé en ce que** le capteur de température (77) est monté contre une paroi (71) du conduit (70).

13. Cuiseur selon la revendication 12, **caractérisé en ce que** la paroi (71) du conduit (70) est amincie au niveau du capteur de température (77).

14. Cuiseur selon l'une des revendications 10 à 13, **caractérisé en ce que** le conduit (70) est ascendant.

15. Cuiseur selon l'une des revendications 1 à 14, **caractérisé en ce que** la cuve (3) est associée à des moyens de chauffe (8).

## Claims

1. A cooker, in particular a pasta cooker, comprising a bowl (2) designed to receive a cooking bath suitable for being brought to the boil, a cooking basket (3) arranged at least in part in the bowl (2), said cooking basket being mounted to move between a raised position and a lowered position, and a steam detector device (7) designed for causing the cooking basket (3) to be lowered into the bowl (2), said cooker being **characterized in that** a side wall (23) of the bowl (2) is provided with a steam detector opening (24) arranged level with the cooking basket (3) when occupying its raised position, the steam detector opening (24) communicating with a chamber (13), and the steam detector device (7) being suitable for being activated by steam flowing in the chamber (13).

2. A cooker according to claim 1, **characterized in that** the side wall (23) of the bowl (2) is provided with an inside shaped piece in relief (25) projecting over the steam detector opening (24).

3. A cooker according to any one of claims 1 to 3, **characterized in that** the bowl (2) is mounted in a housing (1).

4. A cooker according to claim 3, **characterized in that** the chamber (13) is arranged in the housing (1).

5. A cooker according to claim 4, **characterized in that** the chamber (13) opens out into a top wall (15) of the housing (1).

6. A cooker according to any one of claims 3 to 5, **characterized in that** the bowl (2) is removably mounted in the housing (1).

7. A cooker according to any one of claims 1 to 6, **characterized in that** the cooking basket (3) in the raised position is arranged in part inside the bowl (2).

8. A cooker according to any one of claims 1 to 7, **characterized in that** a lid (5) arranged on the cooking basket (3) co-operates with the bowl (2) to form an outer passage (57) when the cooking basket (3) is in its lowered position in the bowl (2).

9. A cooker according to any one of claims 1 to 8, **characterized in that** the steam detector device (7) comprises a temperature sensor (77).

10. A cooker according to any one of claims 1 to 9, **characterized in that** the chamber (13) is formed by a duct (70).

11. A cooker according to claim 9 or claim 10, said cooker being **characterized in that** the temperature sensor (77) is arranged outside the duct (70).

12. A cooker according to claim 11, **characterized in that** the temperature sensor (77) is mounted against a wall (71) of the duct (70).

13. A cooker according to claim 12, **characterized in that** the wall (71) of the duct (70) is of reduced thickness at the temperature sensor (77).

14. A cooker according to any one of claims 10 to 13, **characterized in that** the duct (70) is a rising duct.

15. A cooker according to any one of claims 1 to 14, **characterized in that** the bowl (3) is associated with heater means (8).

## Patentansprüche

1. Kocher, insbesondere Teigwarenkocher, mit einer Wanne (2), die zur Aufnahme eines Kochbads vorgesehen ist, das zum Kochen gebracht werden kann, einem mindestens teilweise in der Wanne (2) angeordneten Kocheinsatz (3), der zwischen einer angehobenen und abgesenkten Position beweglich ist, einer Dampferfassungsvorrichtung (7), die dazu vorgesehen ist, das Absenken des Kocheinsatzes (3) in der Wanne (2) zu steuern, **dadurch gekennzeichnet, dass** eine Seitenwand (23) der Wanne (2) eine Dampferfassungsöffnung (24) aufweist, die auf der Höhe des die angehobene Position einnehmenden Kocheinsatzes (23) angeordnet ist, wobei die Öffnung zum Erfassen von Dampf (24) mit einer Kammer (13) verbunden ist, wobei die Dampferfassungsvorrichtung (7) durch den in der Kammer (13) zirkulierenden Dampf aktiviert werden kann.

2. Kocher nach Anspruch, **dadurch gekennzeichnet, dass** die Seitenwand (23) der Wanne (2) eine innere Anformung (25) aufweist, die die Dampferfassungsöffnung (24) überragt.

3. Kocher nach einem der Ansprüche 1 bis 3, **dadurch gekennzeichnet, dass** die Wanne (2) in einem Gehäuse (1) angebracht ist.

4. Kocher nach Anspruch 3, **dadurch gekennzeichnet, dass** die Kammer (13) im Gehäuse (1) angeordnet.

5. Kocher nach Anspruch 4, **dadurch gekennzeichnet, dass** die Kammer (13) in einer oberen Wand (15) des Gehäuses (1) mündet.

6. Kocher nach einem der Ansprüche 3 bis 5, **dadurch gekennzeichnet, dass** die Wanne (2) im Gehäuse (1) abnehmbar angebracht ist.

7. Kocher nach einem der Ansprüche 1 bis 6, **dadurch gekennzeichnet, dass** der Kocheinsatz (3) in der angehobenen Stellung teilweise innerhalb der Wanne (2) angeordnet ist.

8. Kocher nach einem der Ansprüche 1 bis 7, **dadurch gekennzeichnet, dass** ein auf dem Kocheinsatz (3) angeordneter Deckel (5) einen äußeren Durchgang (57) mit der Wanne (2) bildet, wenn der Kocheinsatz (3) die abgesenkte Stellung in der Wanne (2) einnimmt.

9. Kocher nach einem der Ansprüche 1 bis 8, **dadurch gekennzeichnet, dass** die Dampferfassungsmittelvorrichtung (7) einen Temperatursensor (77) aufweist.

10. Kocher nach einem der Ansprüche 1 bis 9, **dadurch gekennzeichnet, dass** die Kammer (13) durch eine Leitung (70) gebildet ist.

11. Kocher nach einem der Ansprüche 9 und 10, **dadurch gekennzeichnet, dass** der Temperatursensor (77) außerhalb der Leitung (70) angebracht ist.

12. Kocher nach Anspruch 11, **dadurch gekennzeichnet, dass** der Temperatursensor (77) gegen eine Wand (71) der Leitung (70) angebracht ist.

13. Kocher nach Anspruch 12, **dadurch gekennzeichnet, dass** die Wand (71) der Leitung (70) am Temperatursensor (77) verjüngt ist.

14. Kocher nach einem der Ansprüche 10 bis 13, **dadurch gekennzeichnet, dass** die Leitung (70) aufsteigend ist.

15. Kocher nach einem der Ansprüche 1 bis 14, **dadurch gekennzeichnet, dass** die Wanne (3) Heizmitteln (8) zugeordnet ist.
